# EUROPÄISCHE PATENTSCHRIFT

(11) **EP 1 034 046 B1**
(45) Veröffentlichungstag und Bekanntmachung des Hinweises auf die Patenterteilung: **27.02.2002**
(21) Anmeldenummer: 98962258.4
(22) Anmeldetag: 13.11.1998
(51) Int. Cl.: B07C 1/04, B65G 47/31

(54) **EINRICHTUNG ZUR GESCHWINDIGKEITSÄNDERUNG**
SPEED CHANGING DEVICE
DISPOSITIF A VARIATION DE VITESSE

(30) Priorität: 02.12.1997 DE 19753419
(43) Veröffentlichungstag der Anmeldung: 13.09.2000
(73) Patentinhaber: SIEMENS AKTIENGESELLSCHAFT, 80333 München (DE)
(72) Erfinder: MOHR, Keven, D-78462 Konstanz (DE); ZIMMERMANN, Armin, D-78464 Konstanz (DE)
(86) Internationale Anmeldenummer: DE9803345
(87) Internationale Veröffentlichungsnummer: WO9928054

(56) Entgegenhaltungen:
- DE-A- 2 544 499
- DE-B- 1 288 017
- US-A- 4 541 624
- US-A- 4 717 013

## Beschreibung

Die Erfindung betrifft ein Transportsystem für flache Sendungen, mit einem zuführenden und einem abführenden Teil, in denen die vereinzelten Sendungen geklemmt transportiert werden und einer zwischen beiden Teilen angeordneten Transporteinrichtung mit steuerbarer Geschwindigkeit.

Insbesondere in Verteilanlagen werden die Sendungen mit hohen Geschwindigkeiten und minimalen Abständen als Einzelsendungen zwischen endlosen Führungsbändern eingeklemmt transportiert. Da die Lücken zwischen den Sendungen aufgrund von Verschiebungen beim Transport oder von Abzugsfehlern beim Vereinzeln differieren können, ist zur Einhaltung einer hohen Performance und eines störungsarmen Betriebes eine Korrektur der Lücken notwendig. Sollen in der Verteilmaschine die Sendungen mit unterschiedlichen Geschwindigkeiten transportiert werden, sind beim Wechsel der Geschwindigkeiten die Lücken unbedingt zu korrigieren, um konstante Abstände zwischen den Sendungen zu gewährleisten. Wird die Geschwindigkeit nämlich erhöht oder abgesenkt, so werden dabei auch die Abstände zwischen den Sendungen erhöht bzw. verringert.

Es wurden Lösungen bekannt, bei denen zur Erhöhung der Transportgeschwindigkeit hintereinander zwei Führungsbandsysteme angeordnet sind, von denen das in Transportrichtung hintere System mit höherer Geschwindigkeit transportiert. Aufgrund des Geschwindigkeitssprunges an der Übergangsstelle werden die Sendungen auf Zug beansprucht. Dabei kommt es zur Lückenvergrößerung in Abhängigkeit von der Sendungslänge und den unterschiedlichen Reibverhältnissen zwischen den Sendungen und den verschiedenen Führungsbändern.

Zur Lückenkorrektur werden die Sendungen mittels gesteuert angetriebener Rollenpaare beschleunigt und wieder abgebremst, so daß sie nach vorn verschoben werden. Dabei erfolgt ebenfalls eine Zugbeanspruchung der Sendungen.

Es wurde eine Synchronisiereinrichtung für schnell bewegtes, flaches Fördergut bekannt (DE-AS 1 288 017), bei der das Fördergut duch ein Förderbandsystem einer Zwischenbandstrecke zugeführt wird und mit einem weiteren Förderbandsystem abgeführt wird. Die Zwischenbandstrecke hat einen Antrieb mit variabler Geschwindigkeit, mit welcher Verschiebungen des Fördergutes zueinander, d.h. Lückenverschiebungen so korrigiert werden, daß die Fördergüter einer Briefverteilmaschine mit fester Teilung zugeführt werden können. Da die Briefe stets voreilen, erfolgt auf der Zwischenbandstrecke eine gezielte relative Verschiebung nach hinten. Diese Zwischenbandstrecke ist ablaufbedingt relativ lang. Da sich auf dieser langen Strecke jeweils nur eine Sendung befinden darf, ergeben sich zwangsweise große Lücken zwischen den Briefen. Benötigt man große und kleine, hintereinander befindliche Briefe mit gleichmäßig kleinen Lücken, ist diese Aufgabe hiermit nicht lösbar.

Der im Anspruch 1 angegebenen Erfindung liegt deshalb das Problem zugrunde, ein Transportsystem zur Geschwindigkeitsänderung von einzeln auch mit kleinen Lücken nacheinander geklemmmt transportierten Sendungen unterschiedlicher Längen in einem Transportsystem zu schaffen, mit der beliebige Änderungen ohne Zug- oder Stauchbeanspruchungen der Sendungen erfolgen.

Durch die Verwendung einer der Transporteinrichtung mit dem steuerbaren Antrieb vorgelagerten Transporteinrichtung, die den beschleunigenden Transport der Sendungen durch die zweite Transporteinrichtung nicht behindert, treten beim Beschleunigen oder Abbremsen keine Beanspruchungen der Sendungen auf, da in diesem Zeitraum der Antrieb der Sendungen nur durch die Transporteinrichtung mit dem steuerbaren Antrieb erfolgt.

Besonders vorteilhaft hinsichtlich eines einfachen Aufbaus ist es nach Anspruch 2, die erste Transporteinrichtung mit einer zu- und abschaltbaren Klemmung auszuführen.

Vorteilhaft ist es auch nach Anspruch 3, den Antrieb der ersten Transporteinrichtung ein- und auskuppelbar auszuführen.

In einer weiteren vorteilhaften Ausführung nach Anspruch 4 weist die erste Transporteinrichtung einen steuerbaren Antrieb auf, der während der Klemmung der jeweiligen Sendung in der zweiten Transporteinrichtung mit der gleichen Geschwindigkeit wie diese angetrieben wird.

Um die Schalthandlungen des Antriebes der ersten Transporteinrichtung zu reduzieren, weist dieser in der vorteilhaften Ausführung nach Anspruch 5 einen Freilauf auf.

Wird die Sendung in der zweiten Transporteinrichtung mit einer höheren Geschwindigkeit als in der ersten Transporteinrichtung, in der die Sendung noch geklemmt ist, angetrieben, so kann die Sendung mit sehr geringer Beanspruchung in der höheren Geschwindigkeit transportiert werden, da der Freilauf die erste Transporteinrichtung auch in dieser Geschwindigkeit laufen läßt.

Zur Lückenkorrektur wird die Geschwindigkeit gemäß Anspruch 6 vorteilhaft in zwei Beschleunigungsphasen geändert. In der ersten Phase erhält die jeweilige Sendung eine positive oder negative Beschleunigung je nach notwendiger Verschiebungsrichtung und in der zweiten Phase erfolgt eine Anpassung an die Geschwindigkeit des nachfolgenden Teils des Transportsystems. Dabei werden die Beschleunigungszeiten und deren Höhen so festgelegt, daß unter Beachtung der zur Verfügung stehenden Zeit und der Länge der Korrekturstrecke bei der Sendungsübergabe an den nachfolgenden Teil des Transportsystems die notwendige Verschiebung beendet ist, wobei die Beschleunigungen zur Schonung der Sendungen möglichst gering gehalten werden.

In einer vorteilhaften Ausführung nach Anspruch 7 wird die Korrekturstrecke so lang ausgeführt, daß bei den Korrekturen eine maximale Beschleunigung nicht überschritten wird.

Anschließend wird die Erfindung in einem Ausführungsbeispiel anhand der Zeichnung näher erläutert. Dabei zeigen:
- FIG 1: eine Draufsicht auf eine erfindungsgemäße Korrektureinrichtung,
- FIG 2: eine Draufsicht mit Geschwindigkeitsverlauf beim Verschieben nach hinten im Sendungsstrom und
- FIG 3: eine Draufsicht mit Geschwindigkeitsverlauf beim Verschieben nach vorn im Sendungsstrom

Die Sendungen 8 werden in einem ersten zuführenden Teil eines Transportsystems, bestehend aus endlosen, über Umlenkrollen mit der Geschwindigkeit V1 laufenden Führungsriemen 1, zwischen denen die Sendungen eingeklemmt sind, hintereinander auf Lücke vereinzelt zur Korrektureinrichtung antransportiert und durch einen zweiten Teil des Transportsystems, ebenfalls bestehend aus zwei aneinanderlaufenden Führungsriemen 4, übernommen und mit der Geschwindigkeit V2 weitertransportiert.

Dabei kann die Geschwindigkeit V2 größer, kleiner oder gleich der Geschwindigkeit V1 sein.

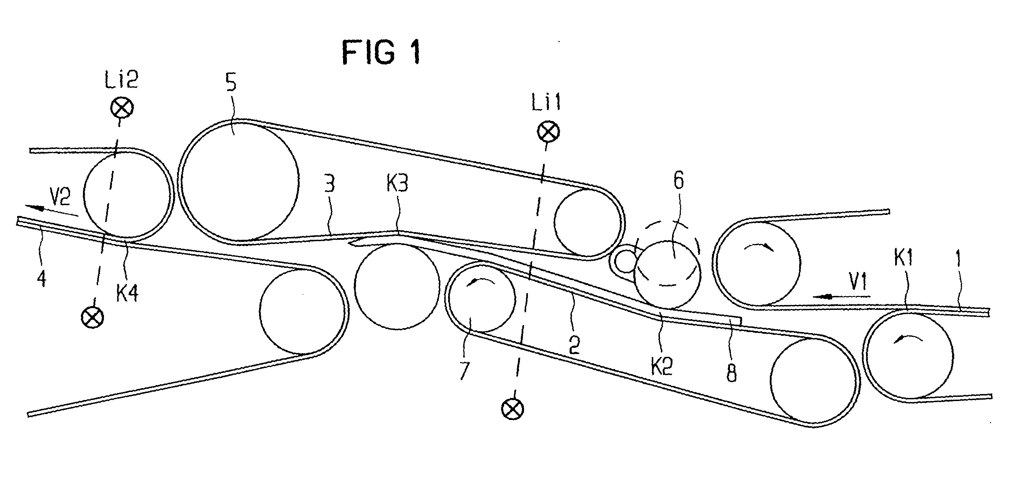

In diesem Beispiel ist die Geschwindigkeit V2 < V1, d.h. neben einer bei Bedarf zu korrigierenden Lücke muß auch ein negativer Geschwindigkeitssprung realisiert werden. Die Umlenkrollen der übergebenden bzw. übernehmenden Teile des Transportsystems sind gemäß Fig. 1 so gegeneinander verschoben, daß Teile einer ersten und zweiten Transporteinrichtung der Korrektureinrichtung in die Teile des Transportsystems hineinragen. Dadurch werden größere, den Sendungslauf störende Lücken vermieden. Die erste Transporteinrichtung enthält einen über zwei Umlenkrollen geführten endlosen Zwischenriemen 2, der mit seinem die Sendungen übernehmenden Teil bis an die hintere (von oben gesehen untere) Umlenkrolle des zuführenden Teils des Transportsystems reicht.

Die zweite, mit der Geschwindigkeit V1 angetriebene Umlenkrolle 7 ist in Richtung des zweiten Teils des Transportsystems gerichtet. Neben der vorderen Umlenkrolle des ersten Teils des Transportsystems in ca. der Mitte zwischen den Umlenkrollen der ersten Transporteinrichtung befindet sich eine Schwenkrolle 6, die gesteuert eingeschwenkt wird und somit gegen den Zwischenriemen 2 drückt und vom Zwischenriemen 2 weggeschwenkt wird. Somit ist an diesem Klemmpunkt K2 die Klemmung der transportierten Sendungen zu- und abschaltbar. Neben der Schwenkrolle 6 der ersten Transporteinrichtung befindet sich eine nichtangetriebene Umlenkrolle, über die ein Steuerriemen 3 der nachfolgenden zweiten Transporteinrichtung geführt wird. Die zweite, mittels Servomotor zur kurzzeitigen Beschleunigung und Abbremsung der Sendungen angetriebene Umlenkrolle 5 ist in Transportrichtung neben der hinteren zurückgezogenen Umlenkrolle des abführenden zweiten Teils des Transportsystems angeordnet.

Zwischen der angetriebenen Umlenkrolle 7 der ersten Transporteinrichtung und der vorgezogenen, übernehmenden Umlenkrolle der Führungsbänder 4 des abführenden Teils des Transportsystems befindet sich eine örtlich feste Abdruckrolle, die ständig gegen den Steuerriemen 3 drückt und damit einen örtlich festen Klemmpunkt K3 für die Sendungen 8 bildet. Die Abstände der Klemmpunkte K2 und K3 untereinander sowie zu den äußersten Klemmpunkten K1 und K4 der zu- und abführenden Teile des Transportsystems sind größer als die Länge der kürzesten Sendung 8, so daß diese beim Transport ständig geklemmt sind. Der Abstand zwischen den Klemmpunkten K1 und K3 ist größer als die Länge der längsten Sendung, so daß sichergestellt ist, daß bei Klemmung im Klemmpunkt K3 die längste Sendung den zuführenden Teil des Transportsystems verlassen hat. Vor der Klemmstelle K3 befindet sich eine Lichtschranke Li 1, die mit der Antriebssteuerung der Umlenkrolle 5 verbunden ist. Wird in der Lichtschranke Li 1 die Vorderkante einer Sendung 8 registriert, so wird die Umlenkrolle 5 mit dem Steuerriemen 3 zu dem Zeitpunkt beschleunigt, daß bei Klemmung der Sendung 8 im Punkt K3 die Geschwindigkeit V1 erreicht ist. Der weitere Ablauf der Geschwindigkeit richtet sich nach den gemessenen und evtl. zu korrigierenden Abständen der Sendungen und den Sendungslängen. In diesem Ausführungsbeispiel werden vor Übernahme der jeweiligen Sendung durch die Einrichtung zur Geschwindigkeitsänderung folgende Daten ermittelt:
1. Lücke vor der Sendung, wobei eine eventuelle Korrektur der Position der Vorgängersendung eingerechnet ist;
2. Sendungslänge
3. Lücke hinter der Sendung

Vorteilhaft, aber nicht zwingend notwendig ist auch die Ermittlung der Länge der Folgesendung. Es wurde eine Korrekturstrategie gewählt, bei der die vordere und hintere Lücke möglichst angeglichen werden, wobei die Möglichkeit, die Folgesendung nach vorn zu verschieben, nicht eingeschränkt wird. Dies liegt darin begründet, daß die Lückenverhältnisse hinter der Folgesendung nicht bekannt sind und es notwendig sein kann, diese maximal nach vorn zu verschieben, damit minimale Lücken nicht unterschritten werden.

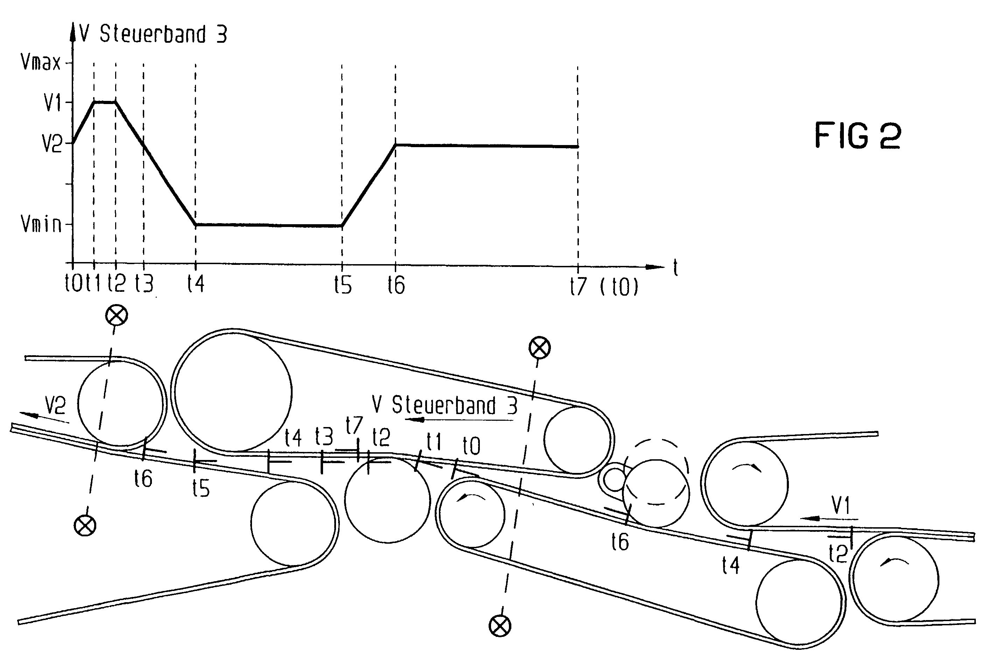

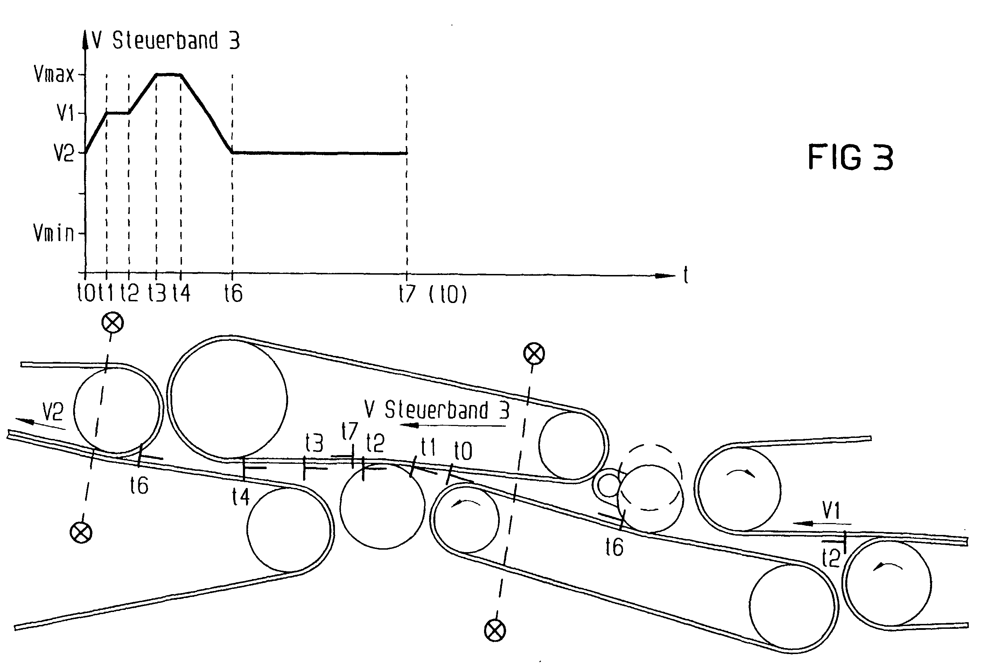

Diese Messung erfolgt mittels einer weiteren, nicht dargestellten, weiter vorn befindlichen Lichtschranke, die soweit vorn postiert ist, daß die Ergebnisse rechtzeitig zur Korrektur vorliegen. Eine weitere beim Klemmpunkt K4 befindliche Lichtschranke Li 2 dient der Überprüfung der Abstände der Sendungen nach Verlassen der Korrektureinrichtung. Sollten noch Abweichungen vom Soll (z.B. durch Schlupf bei besonders schweren Sendungen) bestehen, so werden zusätzliche Korrekturen bei noch vor der Korrektureinrichtung befindlichen Sendungen durchgeführt. Im folgenden wird anhand der Figuren 2 und 3, die auch die Geschwindigkeitsverläufe enthalten, der Ablauf bei der Sendungsverschiebung erläutert.

### Sendungsverschiebung nach hinten (FIG 2):

Befindet sich die Sendungsvorderkante der zu verschiebenden Sendung 8 in der Pos. t0, kurz vor der Klemmstelle K3 des Steuerriemens 3, wird der Steuerriemen 3 auf die Geschwindigkeit V1 beschleunigt, damit die Sendung 8, die noch in den Führungsriemen 1 bzw. am Zwischenriemen 2 mit der Geschwindigkeit V1 gefaßt ist, in der Pos. t1 stauchfrei übernommen wird.

Befindet sich die Sendungsvorderkante der zu verschiebenden Sendung 8 in der Pos. t2, ist die Sendung 8 an der Klemmstelle K3 sicher gefaßt und der Steuerriemen 3 kann bis auf die minimale Geschwindigkeit V min gebremst werden, wodurch die Sendung 8 um den vorher berechneten Wert gegenüber der vorauslaufenden Sendung und der Folgesendung relativ nach hinten verschoben wird. Hat die Sendung 8 über die Pos. t3 und t4 die Pos. t5 erreicht, muß der Steuerriemen 3 auf die Geschwindigkeit V2 beschleunigt werden, damit die Sendung 8 in der Pos. t6 die Geschwindigkeit V2 hat, um zugfrei von den Führungsriemen 4 übernommen zu werden. Bis die Sendungshinterkante die Pos. t7 erreicht hat, wo sie nicht mehr im Steuerriemen 3 geklemmt ist, muß die Geschwindigkeit V2 beibehalten werden, um Zugbeanspruchungen der Sendung 8 zu verhindern.

Zum gleichen Zeitpunkt kann die Folgesendung die Pos. t0 erreicht haben und eine neue Periode kann beginnen.

Damit ergibt sich auch zwischen der Pos. t7 der Sendungshinterkante und der Pos. t0 der Vorderkante der Folgesendung die Minimallücke.

Da die Hinterkante einer langen Sendung 8 bei Erreichen der Pos. t2 noch am Zwischenriemen 2 geklemmt ist, welcher mit der Geschwindigkeit V1 läuft, würde die Sendung zwischen den Klemmstellen K2 und K3 gestaucht werden. Deshalb wird mit Erreichen der Pos. t2 die Schwenkrolle 6 außer Eingriff gebracht, womit die Klemmung K2 aufgehoben wird. Erst wenn die Sendungshinterkante in der Pos. t6 den Klemmpunkt K2 passiert hat, wird die Schwenkrolle 6 wieder in Eingriff gebracht, um die Folgesendung zu übernehmen. Eine Alternative für die Schwenkrolle wäre z.B. den Antrieb des Zwischenbandsystems 2 auszukuppeln oder das Zwischenbandsystem 2 als zweites Steuerbandsystem auszuführen.

### Sendungsverschiebung nach vorn (FIG 3):

Befindet sich die Sendungsvorderkante der zu verschiebenden Sendung 8 in der Pos. t0, kurz vor der Klemmstelle K3 des Steuerriemens 3, wird der Steuerriemen 3 auf die Geschwindigkeit V1 beschleunigt, damit die Sendung 8, die noch in den Führungsriemen 1 bzw. am Zwischenriemen 2 mit der Geschwindigkeit V1 gefaßt ist, in der Pos. t1 stauchfrei übernommen wird.

Befindet sich die Sendungsvorderkante der zu verschiebenden Sendung 8 in der Pos. t2, ist die Sendung an der Klemmstelle K3 sicher gefaßt und der Steuerriemen 3 kann bis auf die maximale Geschwindigkeit V max. beschleunigt werden, wodurch die Sendung 8 um den vorher berechneten Wert gegenüber der vorauslaufenden Sendung und der Folgesendung relativ nach vorn verschoben wird. Hat die Sendung 8 über Pos. t3 die Pos. t4 erreicht, muß der Steuerriemen 3 auf die Geschwindigkeit V2 gebremst werden, damit die Sendung 8 in der Pos. t6 die Geschwindigkeit V2 hat, um stauchfrei von den Führungsriemen 4 übernommen zu werden. Bis die Sendungshinterkante die Pos. t7 erreicht hat, wo sie nicht mehr am Steuerriemen 3 geklemmt ist, muß die Geschwindigkeit V2 beibehalten werden, um Stauchungen der Sendung 8 zu verhindern.

Zum gleichen Zeitpunkt kann die Folgesendung Pos. t0 erreicht haben und eine neue Periode kann beginnen.

Da die Hinterkante einer langen Sendung 8 bei Erreichen der Pos. t2 noch am Zwischenriemen 2 geklemmt ist, welcher mit der Geschwindigkeit V1 läuft, würde die Sendung zwischen den Klemmstellen K2 und K3 auf Zug beansprucht werden, mit der Folge, daß die Sendung 8 nicht der Geschwindigkeit des Steuerriemens 3 folgt, wodurch Korrekturfehler entstehen.

Deshalb wird mit Erreichen der Pos. t2 die Schwenkrolle 6 außer Eingriff gebracht, womit die Klemmung K2 aufgehoben wird. Bei Erreichen der Pos. t6 der Sendungshinterkante wird die Schwenkrolle 6 wieder in Eingriff gebracht. Um die Schalthäufigkeit der Schwenkrolle 6 zu reduzieren, kann die Antriebsrolle 7 des Zwischenriemens 2 mit einem Freilauf ausgestattet werden, wodurch der Zwischenriemen 2, bei minimaler Zugbeanspruchung der Sendung 8, der Beschleunigung des Steuerriemens 3 folgt, trotz Antrieb des Zwischenriemens 2 durch den Zentralantrieb.

## Patentansprüche

1. Transportsystem für flache Sendungen, mit einem zuführenden und einem abführenden Teil, in denen die vereinzelten Sendungen (8) geklemmt transportiert werden und einer zwischen beiden Teilen angeordneten Transporteinrichtung mit steuerbarer Geschwindigkeit, **dadurch gekennzeichnet,**
**daß**
- zwischen den zu- und abführenden Teilen (1,4) des Transportsystems hintereinander zwei die Sendungen (8) geklemmt bewegende Transporteinrichtungen angeordnet sind, wobei die Abstände der benachbarten Klemmungen, von der letzten Klemmung (K1) des zuführenden Teils (1) des Transportsystems, über die Klemmung (K2) der ersten Transporteinrichtung, die Klemmung (K3) der zweiten Transporteinrichtung bis zur ersten Klemmung (K4) des abführenden Teils (4) des Transportsystems, kleiner als die Länge der kürzesten Sendung (8) sind,
- der Abstand zwischen den Klemmungen (K1,K3) des zuführenden Teils des Transportsystems und der in Transportrichtung zweiten Transporteinrichtung größer als die Länge der längsten Sendung (8) ist,
- die erste an den zuführenden Teil (1) des Transportsystems angrenzende Transporteinrichtung (2,6,7) solange mit der gleichen Geschwindigkeit wie der zuführende Teil (1) des Transportsystems angetrieben wird, bis die jeweilige Sendung (8) in der nachfolgenden zweiten Transporteinrichtung (3,5) geklemmt ist und nach dieser Klemmung (K3) keine antreibende oder bremsende Wirkung auf die jeweilige Sendung (8) ausübt, und nachdem die Sendung (8) die erste Transporteinrichtung (2,6,7) verlassen hat, diese wieder mit der Geschwindigkeit des zuführenden Teils (1) des Transportsystems angetrieben wird, die zweite Transporteinrichtung (3,5) mit veränderbarer Geschwindigkeit angetrieben ist, wobei die Geschwindigkeitsänderung so erfolgt, daß im Zeitpunkt der Sendungsübernahme durch den abführenden Teil (4) des Transportsystems die Sendung die Geschwindigkeit des abführenden Teils (4) des Transportsystems aufweist, diese solange beibehält, bis die Hinterkante der Sendung die zweite Transporteinrichtung (3,5) verlassen hat und anschließend die Geschwindigkeit des zuführenden Teils (1) des Transportsystems annimmt.

2. Transportsystem nach Anspruch 1, **dadurch gekennzeichnet, daß** die erste Transporteinrichtung (2,6,7) eine zu- und abschaltbare Klemmung (K2) aufweist.

3. Transportsystem nach Anspruch 1, **dadurch gekennzeichnet, daß** die erste Transporteinrichtung (2,6,7) einen ein- und auskuppelbaren Antrieb aufweist.

4. Transportsystem nach Anspruch 1, **dadurch gekennzeichnet, daß** die erste Transporteinrichtung (2,6,7) einen steuerbaren Antrieb aufweist, der während der Klemmung der jeweiligen Sendung in der zweiten Transporteinrichtung (3,5) mit der gleichen Geschwindigkeit wie die zweite Transporteinrichtung (3,5) angetrieben wird.

5. Transportsystem nach Anspruch 1 bis 4, **dadurch gekennzeichnet, daß** der Antrieb der ersten Transporteinrichtung (2,6,7) einen Freilauf besitzt.

6. Transportsystem nach Anspruch 1 bis 5, **dadurch gekennzeichnet, daß** die Geschwindigkeitsänderung der zweiten Transporteinrichtung (3,5) zur Lückenkorrektur mit zwei Beschleunigungsphasen erfolgt, wobei in der ersten Beschleunigungsphase die gefaßte Sendung eine positive oder negative Beschleunigung gemäß der Differenz zwischen den mittels einer Meßeinrichtung gemessenen Abständen zwischen den Sendungen und dem Sollabstand erhält und in der zweiten Beschleunigungsphase die Geschwindigkeit der gefaßten Sendung an die Geschwindigkeit des zweiten abführenden Teils des Transportsystems angepaßt wird.

7. Transportsystem nach Anspruch 1 oder 6, **dadurch gekennzeichnet, daß** der Abstand zwischen dem letzten Klemmpunkt (K3) der zweiten Transporteinrichtung (3,5) und dem ersten Klemmpunkt (K4) des abführenden Teils (4) des Transportsystems so groß ist, daß die notwendigen Beschleunigungsstrecken für die Geschwindigkeitsänderungen unter Einhaltung einer maximalen Beschleunigung realisiert werden.

## Claims

1. Transporting system for flat items of mail, having a feed part and a removal part, in which the separated items of mail (8) are transported in a clamped manner, and having a controllable-speed transporting arrangement provided between the two parts, **characterized in that**
- two transporting arrangements which move the items of mail (8) in a clamped manner are arranged one behind the other between the feed and removal parts (1, 4) of the transporting system, it being the case that the distances between the adjacent clamping means, from the last clamping means (K1) of the feed part (1) of the transporting system, via the clamping means (K2) of the first transporting arrangement and the clamping means (K3) of the second transporting arrangement as far as the first clamping means (K4) of the removal part (4) of the transporting system, are smaller than the length of the shortest item of mail (8),
- the distance between the clamping means (K1, K3) of the feed part of the transporting system and the second transporting arrangement, as seen in the transporting direction, is greater than the length of the longest item of mail (8),
- the first transporting arrangement (2, 6, 7), which is adjacent to the feed part (1) of the transporting system, is driven at the same speed as the feed part (1) of the transporting system until the respective item of mail (8) is clamped in the following, second transporting arrangement (3, 5), and does not subject the respective item of mail (8) to any driving or braking action following said clamping (K3), and, once the item of mail (8) has left the first transporting arrangement (2, 6, 7), the latter is driven at the speed of the feed part (1) of the transporting system again, and the second transporting arrangement (3, 5) is driven at a variable speed, the change in speed taking place such that the item of mail moves at the speed of the removal part (4) of the transporting system at the point in time when it is received by the removal part (4) of the transporting system, maintains this speed until the trailing edge of the item of mail has left the second transporting arrangement (3, 5), and then assumes the speed of the feed part (1) of the transporting system.

2. Transporting system according to Claim 1, **characterized in that** the first transporting arrangement (2, 6, 7) has a clamping means (K2) which can be switched on and off.

3. Transporting system according to Claim 1, **characterized in that** the first transporting arrangement (2, 6, 7) has a drive which can be engaged and disengaged.

4. Transporting system according to Claim 1, **characterized in that** the first transporting arrangement (2, 6, 7) has a controllable drive which, as the respective item of mail is clamped in the second transporting arrangement (3, 5), is driven at the same speed as the second transporting arrangement (3, 5).

5. Transporting system according to Claims 1 to 4, **characterized in that** the drive of the first transporting arrangement (2, 6, 7) has a freewheel.

6. Transporting system according to Claims 1 to 5, **characterized in that** the change in speed of the second transporting arrangement (3, 5), for gapcorrection purposes, takes place with two acceleration phases, it being the case that, in the first acceleration phase, the gripped item of mail is subjected to positive or negative acceleration in accordance with the difference between the distances between the items of mail, this being measured by means of a measuring arrangement, and the desired distance and, in the second accelerating phase, the speed of the gripped item of mail is adapted to the speed of the second, removal part of the transporting system.

7. Transporting system according to Claim 1 or 6, **characterized in that** the distance between the last clamping point (K3) of the second transporting arrangement (3, 5) and the first clamping point (K4) of the removal part (4) of the transporting system is large enough to realize the necessary acceleration sections for the changes in speed, while complying with a maximum acceleration in the process.

## Revendications

1. Système de transport d'envois plats, comportant une partie d'alimentation et une partie d'évacuation, dans lesquelles les envois (8) individualisés sont transportés avec serrage en étant séparés les uns des autres, et comportant un transporteur dont on peut commander la vitesse et qui est disposé entre les deux parties,
**caractérisé en ce que**
- deux transporteurs déplaçant les envois (8) avec serrage sont disposés l'un après l'autre entre les parties (1, 4) d'alimentation et d'évacuation du système de transport, les distances entre les points de serrage voisins, depuis le dernier point (K1) de serrage de la partie (1) d'alimentation du système de transport jusqu'au premier point (K4) de serrage de la partie (4) d'évacuation du système de transport, en passant par le point (K2) de serrage du premier transporteur et le point (K3) de serrage du deuxième transporteur, étant inférieures à la longueur de l'envoi (8) le plus court,
- la distance entre les points (K1, K3) de serrage de la partie d'alimentation du système de transport et du deuxième (dans la direction de transport) transporteur est supérieure à la longueur de l'envoi (8) le plus long,
- le premier transporteur (2, 6, 7), attenant à la partie (1) d'alimentation du système de transport, est entraîné à la même vitesse que la partie (1) d'alimentation du système de transport jusqu'à ce que l'envoi (8) respectif soit serré dans le deuxième transporteur (3, 5), consécutif, et n'exerce après ce point (K3) de serrage aucune action d'entraînement ou de serrage sur l'envoi (8) respectif, et une fois que l'envoi (8) a quitté le premier transporteur (2, 6, 7), celui-ci est à nouveau entraîné à la vitesse de la partie (1) d'alimentation du système de transport, et le deuxième transporteur (3, 5) est entraîné à vitesse variable, la modification de vitesse s'effectuant de telle sorte que, à l'instant de la prise en charge de l'envoi par la partie (4) d'évacuation du système de transport, l'envoi possède la vitesse de la partie (4) d'évacuation du système de transport, et conserve cette vitesse jusqu'à ce que le bord arrière de l'envoi ait quitté le deuxième transporteur (3, 5), puis prend la vitesse de la partie (1) d'alimentation du système de transport.

2. Système de transport suivant la revendication 1, **caractérisé en ce que** le premier transporteur (2, 6, 7) comporte un point (K2) de serrage pouvant être activé et désactivé.

3. Système de transport suivant la revendication 1, **caractérisé en ce que** le premier transporteur (2, 6, 7) comporte un entraînement embrayable et débrayable.

4. Système de transport suivant la revendication 1, **caractérisé en ce que** le premier transporteur (2, 6, 7) comporte un entraînement qui peut être commandé qui est entraîné à la même vitesse que le deuxième transporteur (3, 5) pendant le serrage de l'envoi respectif dans le deuxième transporteur (3, 5).

5. Système de transport suivant l'une des revendications 1 à 4, **caractérisé en ce que** l'entraînement du premier transporteur (2, 6, 7) possède un mécanisme de roue libre.

6. Système de transport suivant l'une des revendications 1 à 5, **caractérisé en ce que** la modification de vitesse du deuxième transporteur (3, 5) en vue de corriger les espaces vides s'effectue avec deux phases d'accélération, suivant lesquelles, dans la première phase d'accélération, l'envoi serré reçoit une accélération positive ou négative conformément à la différence entre les distances entre les envois, mesurées au moyen d'un dispositif de mesure, et la distance de consigne, et, dans la deuxième phase d'accélération, la vitesse de l'envoi serré est adaptée à la vitesse de la deuxième partie, d'évacuation, du système de transport.

7. Système de transport suivant la revendication 1 ou 6, **caractérisé en ce que** la distance entre le dernier point (K3) de serrage du deuxième transporteur (3, 5) et le premier point (K4) de serrage de la partie (4) d'évacuation du système de transport est suffisante pour obtenir les parcours nécessaires d'accélération pour les modifications de vitesse en respectant une accélération maximale.
